# EUROPEAN PATENT APPLICATION

(11) **EP 0 870 999 A2**
(43) Date of publication of application: **14.10.1998**
(21) Application number: 98302834.1
(22) Date of filing: 09.04.1998
(51) Int. Cl.: F25B 37/00, F25B 39/02, F28F 9/16, F28F 13/12

(54) **An absorption refrigerator**

(30) Priority: 09.04.1997 JP 90431/97; 17.04.1997 JP 100552/97; 17.04.1997 JP 100553/97
(71) Applicant: SANYO ELECTRIC Co., Ltd., Moriguchi-shi, Osaka (JP)
(72) Inventor: Abe, Tadao, Ashikaga-shi, Tochigi-ken (JP); Takase, Yasuo, Aso-gun, Tochigi-ken (JP); Kawakami, Akio, Kuki-shi, Saitama-ken (JP)
(74) Representative: Finnie, Peter John

(57) **Abstract**

The invention relates to an absorption refrigerator (1) for controlling the lowering of the heat efficiency of an absorber (5) by securely introducing an absorption solution supplied to the absorber (5) to the inner walls of the heat exchanger pipes (20) disposed in the absorber (5). In one example of the invention, the absorber (5) has a plurality of heat exchanger pipes (20) passing through a pair of vertically spaced partition plates with a plurality of through holes whereby the inner wall surface (20a) of each of said through holes (25a) in the upper partition plate (25) is funnel-shaped and each of the heat exchanger pipes (20) has therein a dispersion plate (50) which has substantially the same width as the inner diameter of the heat exchanger pipe (20) and which is spirally twisted about an axis lying at substantially the intermediate portion of the width of the heat exchanger pipe (20). In another example of the invention, each of the heat exchanger pipes (20) has circumferential grooves (L) on the inner wall surface thereof. This construction can be also applied to heat exchanger pipes (12) of an evaporator (4).

## Description

The present invention relates to an absorption refrigerator for use, for example, with an air conditioner or a water heater.

An example of a conventional absorption refrigerator is shown in Fig. 5. In Fig. 5, the absorption refrigerator 1 generally comprises a rectifier 2 having the regenerative function of heating an absorption solution B diluted as a result of absorbing a vaporized refrigerant A and separating the refrigerant A from the absorption solution B by vaporization, and the function of separating the absorption solution from the vaporized refrigerant. Further, the absorption refrigerator 1 comprises a condenser 3 for condensing and liquefying the separated vaporized refrigerant A, an evaporator 4 into which the liquefied refrigerant A from the condenser 3 is supplied and which is adapted to vaporize the liquefied refrigerant by depriving a heat medium C such as the outside air contacting the outer surface thereof of its latent heat of vaporization and an absorber 5 for causing the vaporized refrigerant A from the rectifier 2 2 to react against the absorption solution B which has been enriched due to the vaporization of the refrigerant A from the rectifier to thereby allow the refrigerant A vaporized by evaporation to be absorbed in the absorption solution B and for circulating the absorption solution B, which has absorbed the refrigerant A, through the above-mentioned rectifier 2.

The rectifier 2 comprises a cylindrical rectifying tower 6, a regenerator 8 directly connected to the lower part of the rectifying tower 6 and provided with a burner 7 as a heating portion for heating the absorption solution B which has absorbed the refrigerant A (the absorption solution B having absorbed the refrigerant A is hereinafter called the diluted absorption solution D) , a diluted absorption solution spraying nozzle unit 9 provided substantially at the central portion of the rectifying tower 6 and adapted to spray the diluted absorption solution D into the rectifying tower 6, and a filler material 10 such as a non-woven fabric interposed between the diluted absorption solution spraying nozzle unit 9 and the regenerator 8, and a refrigerant tank 11 for storing the condensed refrigerant A is directly connected to the condenser 3.

The evaporator 4 comprised a plurality of heat exchanger pipes 12 arranged in the vertical direction, an upper heater 13 for connecting the upper ends of the heat exchanger pipes 12 so as to make them communicate with one another, a lower header 14 for connecting the lower ends of the heat exchanger pipes 12 so as to make them communicate with one another and a number of heat exchanger fins 15 through which the heat exchanger pipes 12 fixedly pass. Further, the lower ends of the heat exchanger pipes 12 are connected with the refrigerant tank 11 through a refrigerant supply pipe 16, the upper header 13 is connected with the upper end of the absorber 5 through a communication pipe 17 and the lower header 14 is connected with a diluted absorption solution tank 18 provided below the lower end of the absorber 5.

The absorber 5 comprises absorption solution dripping means 19 connected with the communication pipe 17 directly connected to the upper header 13 of the evaporator 4, the above-mentioned diluted absorption solution tank 18 arranged below the absorption solution dripping means 19 leaving a space from the latter and adapted to store therein the absorption solution B, that is, the diluted absorption solution D, which has absorbed the refrigerant A after vaporization, a plurality of heat exchanger pipes 20 which establish communication between the absorption solution dripping means 19 and the diluted absorption solution tank 18 and an outer sheath 22 which is arranged to surround the heat exchanger pipes 20 and which forms a cooling water path 21 between the absorption solution dripping means 19 and the diluted absorption solution tank 18 whereby when the heat exchanger pipes 20 are cooled to reduce the internal pressure thereof, the refrigerant A vaporized in the heat exchanger pipes 12 is sucked by the heat exchanger pipes 20.

Further, the absorption solution dripping means 19 has its upper end connected with an absorption solution supply pipe 23 for supplying the absorption solution B condensed by the regenerator 8 and within this means 19 there are mounted an absorption solution spray nozzle unit 24 for spraying the absorption solution supplied from the absorption solution supply pipe 23 so as to divide the interior of the means 19 into an upper and a lower part. Below the nozzle unit 24 there are provided the heat exchanger pipes 20 so as to fixedly pass therethrough and a partition wall 25 for separating the absorption solution dripping means 19 and the cooling water path 21 from each other. Further, between the partition wall 25 and the absorption solution spray nozzle unit 24 there is connected the communication pipe 17 through which the vaporized refrigerant A from the evaporator 4 is supplied.

Further, the diluted absorption tank 18 is held in communication with the diluted solution spray nozzle unit 9 through a diluted absorption solution return pipe 26 and at the intermediate portion of the return pipe 26, there is provided a diluted absorption solution circulating pump 27 for supplying the diluted absorption solution D stored in the diluted absorption solution tank 18 to the diluted absorption solution spray nozzle unit 9.

Between the upper end of the outer sheath 22 of the absorber 5 and the condenser 3 there is provided a communication pipe 28 to thereby establish communication therebetween and between the condenser 3 and the lower end of the outer sheath 22 of the absorber 5 there is provided a connection pipe 29 to thereby establish communication pipe 28, the condenser 3 and the communication pipe 29 form a closed circuit for the circulation of cooling water and at the intermediate portion of the communication pipe 29, there are provided a heating room unit 30 for discharging heat of the heated cooling water and a cooling water circulation pump 31 for circulating the cooling water E.

Reference numeral 32 designates a heat exchanger into which the absorption solution supply pipe 23 and the diluted absorption solution return pipe 26 are inserted so as to perform heat exchanging operation therebetween. A blower 33 is provided for supplying the outside air as an external heat medium C to the evaporator 4 and a heat exchanger 34 is provided for performing a heat exchanging operation between the cooling water supplied to the absorber 5 and the refrigerant A to be supplied to the absorption solution dripping means 19.

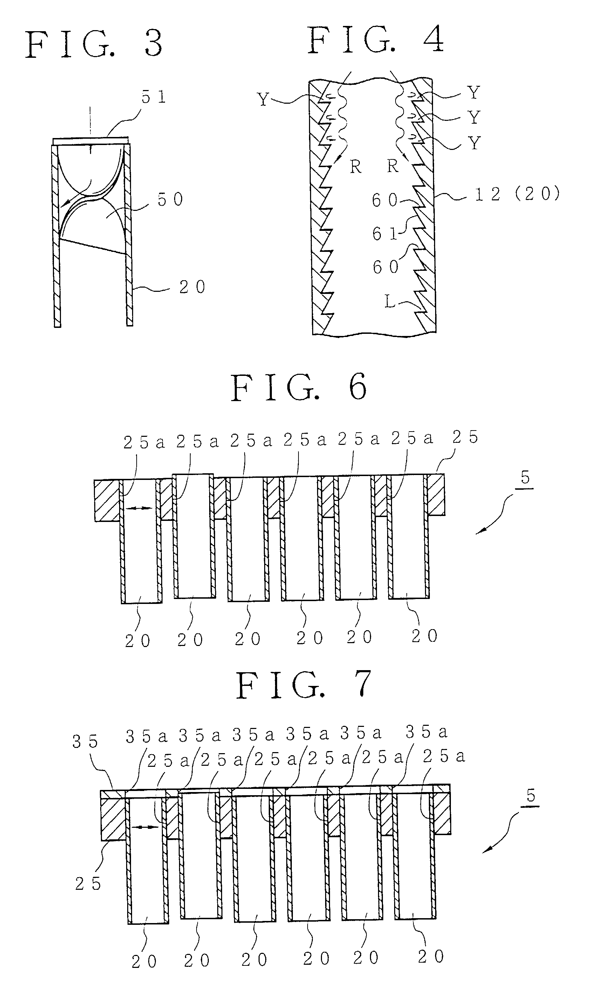

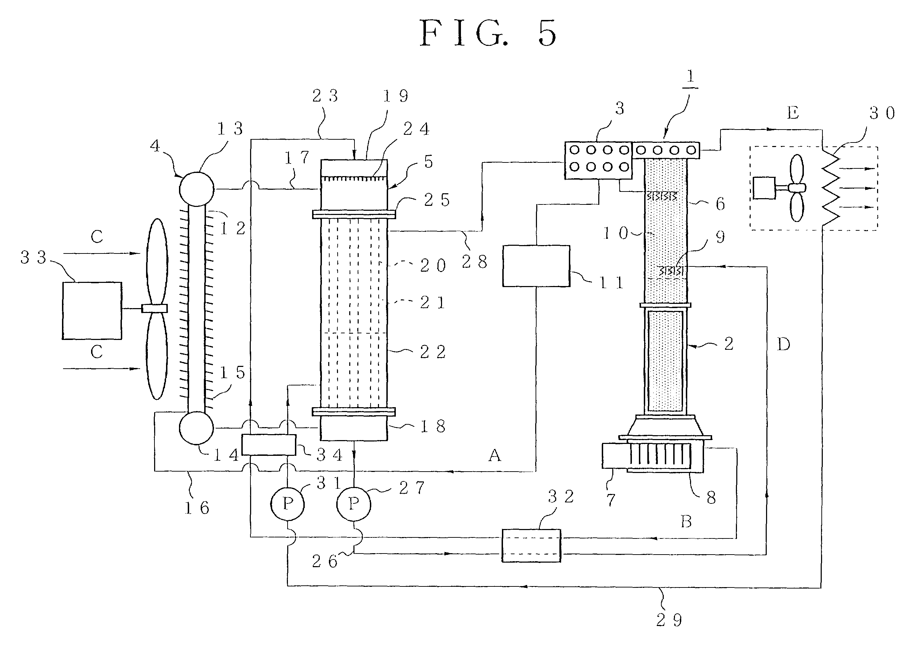

As shown in Fig. 6, the heat exchanger pipes 20 forming the absorber 5 and the partition wall 25 are fixed together in a liquid-tight manner such that one end of each of the heat exchanger pipes 20 is passed through each of through holes 25a in the partition wall 25 and then the upper end of the heat exchanger pipe 20 is widened to come into pressure-contact with the inner wall of the through hole 25a as designated by the arrow in Fig. 7.

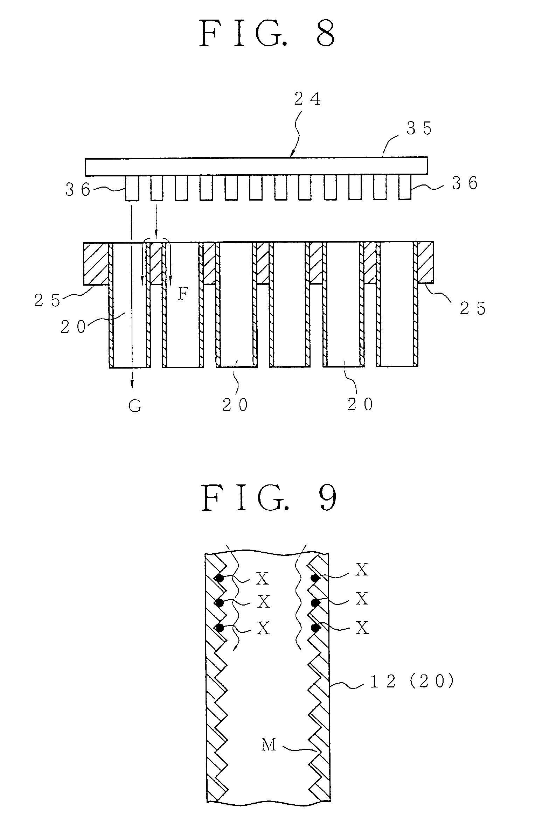

Further, as shown in Fig. 8, the absorption solution spray nozzle unit 24 comprises a radial header 35 for distributing the absorption solution B (Fig. 5) supplied from the above-mentioned absorption solution supply pipe 23 and a plurality of nozzle 36 integrally attached to the header 35.

On the inner wall of each of the heat exchanger pipes 12 of the evaporator 4 or that of each of the heat exchanger pipes 20, there are formed a plurality of grooves M (angular in section) extending along the entire inner circumference thereof over the entire length thereof leaving predetermined intervals among them in the longitudinal direction of the pipe shown in Fig. 9.

Each of these grooves M is proved to increase the surface area of the inner wall of each of the heat exchanger pipes 12 (20) and at the same time, to uniformly spread the refrigerant A or the diluted absorption solution D flowing along the inner wall to thereby increase the heat exchange efficiency and the absorption efficiency of the refrigerant A.

In the case of the absorption refrigerator 1 having the above-described structure, the liquefied refrigerant A supplied from the refrigerant tank 11 is dripped down on the inner wall of each of the heat exchanger pipes 12 and caused to flow down along the inner wall and the outside air as the heat medium C is brought into contact with the surfaces of the above-mentioned heat exchanger fins 15 and the heat exchanger pipes 12 whereby a heat exchange operation is performed between the outside air C and the liquefied refrigerant A flowing down along the inner wall surfaces of the heat exchanger pipes so that the liquefied refrigerant A vaporizes by depriving the outside air of its latent heat of vaporization, the vaporized refrigerant A moves upward within each of the heat exchanger pipes 12 and after being collected by the upper header 13 provided on the upper ends of the heat exchanger pipes 12, it is I supplied to the absorber 5.

The vaporized refrigerant A supplied to the absorber 5 is sprayed from the regenerator 8 through the plurality of nozzles 36 of the absorption solution spray nozzle unit 24 and as a result of being brought into contact with the absorption solution B on the inner wall of each of the heat exchanger pipes 20, it is absorbed in the absorption solution B to make the dilution absorption solution d which is then collected by the diluted absorption solution tank 8 through the heat exchanger pipes 20. Further, the diluted solution D is supplied to the diluted absorption solution spray nozzle unit 9 by means of the diluted absorption solution circulation pump 27 so as to be sprayed into the rectifying tower 6 and is then heated by the burner 7 arranged below the rectifying tower 6 so that the refrigerant A is vaporized to thereby separate the diluted absorption solution D into the absorption solution B and the refrigerant A.

The separated refrigerant A exchangers heat with the cooling water E during its passage through the condenser 3 and gives the cooling water E the heat which has been absorbed from the outside air during its passage through the absorber 5.

Accordingly, the cooling water E is gradually heated as it is circulated through the absorber 5 and the condenser and then it is supplied to the room unit 30 for heating.

In case of such absorption refrigerator 1, it is possible to increase the amount of heat radiation from the room unit 30 with respect to the calorific value of the burner 7 by more than 1. 3 times by supplementarily heating the cooling water E through the absorption of the thermal energy of the outside air C.

Now, in the case of such absorption refrigerator 1, the heat exchanger pipes 20 are fixed to the partition wall 25 forming the absorber 5 merely in such a manner that the upper end of the heat exchanger pipes 20 is passed through the through hole 25a of the partition wall and then radially expanded to be brought into pressure contact with the inner wall of the through hole and therefore, if the heat exchanger pipes 20 differ in length from one another, there is sometimes a case in which as shown in Fig. 6, the upper end of each of the heat exchanger pipes 20 projects beyond the upper surface of the partition wall 25.

Thus, when the upper end of each of the heat exchanger pipes 20 projects from the upper surface of the partition wall 25, the flow of the dilution absorption solution D caused to fall down upon the partition wall 25 is hindered by the projecting portion of each heat exchanger pipe 20 and the distribution of the diluted absorption solution D flowing into the plurality of heat exchanger pipes 20 becomes non-uniform among the pipes.

As a result, there arises the disadvantage that the heat exchange efficiency of the absorber 5 lowers.

Further, due to the fact that the upper ends of the heat exchanger pipes 20 are brought into pressure contact with the inner walls of the through-holes 25a, respectively, by radially expanding the heat exchanger pipes, there remains the problem that the connecting strength of these heat exchanger pipes is not sufficient.

On the other hand, in order to make uniform the flow of the diluted absorption D into each of the heat exchanger pipes 20, it may be considered to hide the projecting portion of each heat exchanger pipe 20 by overlapping an auxiliary plate 35, as shown in Fig. 7, so that the auxiliary plate 35 has a through hole 35a of the same pattern as the through-hole 25a of the partition wall 25 over that partition wall 25 but is not an effective solution because by so doing, the manufacturing cost increases due to an increase in the number of parts and the necessity of a complicated processing of drilling a plurality of through holes 35a in compliance with the pattern of the through hole 25a of the partition wall 25.

A first object of the present invention is to provide an absorption refrigerator which is capable of making uniform the flow of a diluted absorption solution into a plurality of heat exchanger pipes provided in an absorber and which is capable of securing the connecting strength of the heat exchanger pipes with a partition wall to which the heat exchanger pipes are attached.

A second object of the present invention is to provide an absorption refrigerator which is capable of controlling the lowering of the heat exchange efficiency by securely introducing the absorption solution to be supplied into the absorber to the inner wall surface of each of the heat exchanger pipes.

A third object of the present invention is to provide an absorption refrigerator which is capable of reducing the lowering of the heat exchange efficiency by promoting the turbulence of the flow of the refrigerant or the diluted absorption solution while securing the heat exchange area on the inner wall of the evaporator and/or the absorber.

An absorption refrigerator according to a first aspect of the present invention comprises a rectifier having a heating portion for heating an absorption solution which has absorbed a heat exchanger refrigerant and separating the refrigerant by vaporization from the absorption solution, a condenser for condensing and liquefying the separated vaporized refrigerant, an evaporator into which the liquefied refrigerant from the condenser is supplied and which is adapted to vaporize the refrigerant through its heat exchange with a heat medium brought into contact with the outer surface thereof and an absorber for allowing the refrigerant to be absorbed in the absorption solution by causing the vaporized refrigerant supplied from the evaporator to react against the absorption solution from the rectifier and for circulating the absorption solution which has absorbed the refrigerant therein, through the rectifier and wherein the absorber comprises a pair of vertically spaced apart upper and lower partition plates and a plurality of heat transfer pipes passing through the partition plates said upper partition plate being provided with a plurality of through holes for permitting said heat exchange pipes respectively to pass therethrough, the inner wall surface of each of said through holes being funnel-shaped to become gradually larger in diameter as it extends upward and the upper end of each of said heat exchange pipes being expanded radially so as to extend along the inner wall surface of each of said through holes to thereby become press-fitted to said inner wall surface.

An absorption refrigerator according to a second aspect of the present invention comprises a rectifier having a heating portion for heating an absorption solution which has absorbed a heat exchange refrigerant and separating the refrigerant from the absorption solution by vaporization, a condenser for condensing and liquefying the separated vaporized refrigerant, an evaporator into which the liquefied refrigerant from the condenser is supplied and which is adapted to vaporize the refrigerant through its heat exchange with a heat medium caused to be brought into contact with the outer surface thereof and an absorber for permitting the refrigerant to be absorbed in the absorption solution by causing the vaporized refrigerant from the evaporator to react against the absorption solution which has absorbed the refrigerant therein, and for circulating the absorption solution which has absorbed the refrigerant through the rectifier, wherein said absorber has a plurality of heat exchanger pipes into which a diluted absorption solution having absorbed said refrigerant is caused to flow down and a dispersion plate arranged on the upper end of each of said heat exchanger pipes, said dispersion plate having a width substantially equal to the inner diameter of each of said heat exchanger pipes and which is spirally twisted about an axis which is parallel to a longitudinal axis of a respective heat exchanger pipe.

As a modification of the above-described structure, it is also possible to construct the diffusion plate in such a manner that the lower edge of diffusion plate is made to incline with respect to a horizontal plane.

An absorption refrigerator according to a third aspect of the present invention comprises a rectifier having a heating portion for heating an absorption solution which has absorbed a heat exchange refrigerant and separating the refrigerant from the absorption solution by vaporization, a condenser for condensing and liquefying the separated vaporized refrigerant, an evaporator into which the liquefied refrigerant from the condenser is supplied and which is adapted to vaporize the refrigerant through its heat exchange with a heat medium caused to be brought into contact with the outer surface thereof and an absorber for allowing the refrigerant to be absorbed in the absorption solution by causing the vaporized refrigerant supplied from the evaporator and the absorption solution from the rectifier to react against the absorption solution from the rectifier, wherein at least one of the evaporator and the absorber has a plurality of heat exchanger pipes, each of the plurality of heat exchanger pipes has on the inner wall thereof a plurality of circumferentially extending, spaced apart grooves, and each of the grooves having a horizontal surface extending perpendicularly to said inner wall and an inclined surface connecting an outer edge of said horizontal surface of the adjoining upper groove and the base end of said horizontal surface located therebelow.

The formation of the grooves provided on the inner circumferential wall of each of the heat exchanger pipes may be employed in the structure according to the first and second aspects of the present invention.

Examples of the present invention will now be described in detail with reference to the accompanying drawings, in which:
Fig. 1 is an enlarged vertical sectional view of an essential portion of the structure of each of heat exchanger pipes according to a first embodiment of the present invention;
Fig. 2 is a vertical sectional view of an essential portion of the structure of each heat exchanger pipes according to a second embodiment of the present invention;
Fig. 3 is an enlarged vertical sectional view of one of the heat exchanger pipes shown in Fig. 2;
Fig. 4 is an enlarged vertical sectional view of the inner wall structure of a heat exchanger pipe according to a third embodiment of the present invention;
Fig. 5 is a system block diagram showing one example of a general absorption refrigerator of the type to which the present invention relates;
Fig. 6 is an enlarged vertical sectional view of an essential portion of a conventional absorber shown in Fig. 5;
Fig. 7 is an enlarged vertical sectional view of a modification of the essential portion of the conventional absorber shown in Fig. 5;
Fig. 8 is an enlarge vertical sectional view of an essential portion of another conventional absorber different from the absorber shown in Fig. 5; and,
Fig. 9 is an enlarged vertical sectional view of the inner wall structure of a conventional heat exchanger pipe.

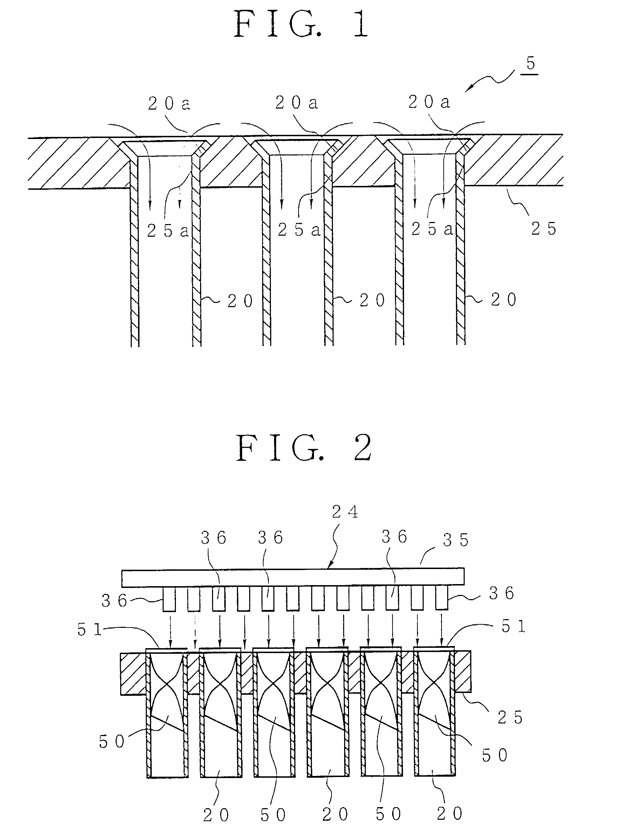

The present invention will now be described with reference to Figs. 1 and 5, wherein fig. 5 shows a system configuration indicative of one example of a conventional absorption refrigerator.

It should be noted that throughout the drawings, like parts are designated by like reference numerals and symbols for the sake of simplicity of description.

In this example, an absorption refrigerator 1 comprises a rectifier 2 provided with a heating portion for heating an absorption solution B which has absorbed a heat exchange refrigerant A and separating the refrigerant A from the absorption solution B by vaporization, a condenser 3 for condensing and liquefying the separated vaporized refrigerant A, an evaporator 4 into which the liquefied refrigerant A from the condenser 3 is supplied and which is adapted to vaporize the refrigerant A through its heat exchange with a heat medium C caused to be brought into contact with the outer surface thereof and an absorber 5 for allowing the refrigerant A to be absorbed in the absorption solution B by causing the vaporized refrigerant A supplied from the evaporator 4 and the absorption solution A from the rectifier 2 2 to react against each other and for circulating the absorption solution B (diluted absorption solution D) , which has absorbed the refrigerant A therein, through the rectifier 2.

The absorber 5 forming the absorption refrigerator 1 has a partition wall 25 which is provided with a plurality of through holes 25a into which a plurality of heat exchanger pipes 20 are respectively inserted and the inner wall surface 20a of each of these through holes 25a is funnel-shaped so as to become gradually larger in diameter as it extends upward.

Each of the heat exchanger pipes 20 is deformed along the funnel-shaped inner wall surface 20a of the above-described through hole when the upper end of the heat exchanger pipe 20 has been inserted into the through hole 25a and radially expanded by plastic working and is then fixed by being held into pressure contact with the inner wall surface 20a.

Each of the heat exchanger pipes 20 thus fixed comes to have its upper end located inside the upper surf ace of the partition wall 25 because even when the pipes 20 differ in length from one another, the size of the length thereof is reduced by being bent aslant by pipe-expansion working.

Accordingly, the flow of the diluted absorption solution D fallen down upon the partition wall 25 is not hindered by the upper ends of the heat exchanger pipes 20 so that the diluted absorption solution D flows uniformly into the heat exchanger pipes 20 resulting in increasing the heat exchange efficiency of the absorber 5.

Further, since each of the heat transfer pipes 20 and the partition wall 25 are joined in two different planes, that is, a plane extending along the longitudinal direction of each of the heat transfer pipes 20 and a plane intersecting the longitudinal direction of each of the heat transfer pipes, the strength of the connection of the two members is increased and the liquid-tightness of the connection is increased because the connecting surface of each of the heat transfer pipes 20 is bent.

It should be noted that the shaped and size of each of the constituent members of the absorption refrigerator in the above-described embodiment are merely an example and they can be varied in a variety of ways on the basis of design requirements and the like.

For example, the ratio between the funnel-shaped portion of each of the through holes 25a and the uniform inner diameter portion of the through hole and the uniform inner diameter portion of the through hole and the angle of inclination of the funnel-shaped portion can be freely set so that, for example, by setting the values of these factors on the basis of the degree of scattering in length among the heat exchanger pipes. it is possible to locate the upper end of ear-h of the heat exchanger pipes within the corresponding through hole 25a securely after bending the upper end.

As described above, the inner wall surface of each of the through holes 25a formed in the upper partition wall 25 so as to allow each of the heat exchanger pipes 20 to pass therethrough is made funnel-shaped to become larger in diameter as it extends upward and the upper end of each of the heat transfer pipes 20 is radially expanded to extend along the inner wall surface of the corresponding through hole 25a to thereby become pressure fixed to the wall surface so that even when the heat exchanger pipes 2 0 differ in length from one another, longitudinal size of each of the heat exchanger pipes is reduced by bending the upper end of the pipe and it is possible to prevent the end of the pipe from projecting from the upper surface of the partition wall 25 by absorbing the above-mentioned dimensional scattering.

Thus, with the above arrangement, the now of the diluted absorption solution D falling down upon the upper surface of the partition wall 25 is prevented from being hindered so that it is possible to allow the diluted absorption solution to uniformly flow into each of the heat exchanger pipes and to prevent the lowering of the heat exchange efficiency of the absorber 5.

Further, by connecting the heat exchanger pipes 20 and the partition wall 25 in two intersecting planes, it is possible to increase the connecting strength and the liquid-tightness of the connected portion.

Figs. 2 and 3 show a second example of the present invention. In these figures of the drawing, the absorption refrigerator is generally constructed such that the absorber 5 is provided with a plurality of heat exchanger pipes 20 into which the diluted absorption solution B which has absorbed the refrigerant A is caused to flow down and at the upper end of each of the heat exchanger pipes 20 there is provided a dispersion plate 5 0 having a width substantially equal to the inner diameter of each of the heat exchanger pipes 20 and which is spirally twisted along an axis lying at substantially the intermediate portion of the width thereof.

More specifically, the dispersion plate 50 is formed by twisting a metallic thin plate by about 180 degrees so as to allow both ends of the plate to lie in the same plane and to the upper end thereof an engaging member 51 which has a length larger than the width of the plate 50 and which is brought into contact with the upper edge of each heat exchanger pipe 20 is integrally attached with the lower edge of the plate 50 being held inclined with respect to the horizontal plane.

The dispersion plate 50 thus constructed is inserted into each of the heat exchanger pipes 20 from the upper end of the latter and when the engaging member 51 is brought into contact with the upper end surface of the heat exchanger pipe 20, the dispersion plate 50 will be located at the predetermined position of the heat exchanger pipe 20.

When mounted in the corresponding heat exchanger pipe 20, the dispersion plate 50 has both side edges thereof held in contact with the inner wall of the heat exchanger pipe 20 thereby providing a spiral path between it and the heat exchanger pipe 20 and when viewed from the direction of axis of the heat exchanger pipe 20, the heat exchanger pipe 20 is covered by the dispersion plate 50 leaving the lower end opening of the heat exchanger pipe 20 to lie in a hidden state.

In this example, the absorption solution B sprayed from the absorption solution spray nozzle 24 is caused to fall down toward the partition wall 25 and to react against the refrigerant A to become the diluted absorption solution D. Then, almost all the diluted absorption solution D is introduced to the inner wall of each of the heat exchanger pipes 20 from the upper surface of the partition wall 25 and while it is caused to flow down along the inner wall, it exchanges heat with the cooling water E to be supplied to the absorber 5 via the inner wall.

Further, where the diluted absorption solution d has been fallen down at the central portion of each of the heat exchanger pipes 20, the flow of the diluted absorption solution D is parallel to the axis of the heat exchanger pipe 20 but since the dispersion plate 50 is located ahead in the falling direction of the diluted absorption solution D, the diluted absorption solution D is guided to ward the inner wall of the corresponding heat exchanger pipe 20 by the inclination of the dispersion plate 50 as shown in Fig. 3 after the diluted absorption solution D runs against the dispersion plate 50.

Further, the lower edge of the dispersion plate 50 is inclined from one side toward the other with respect to the horizontal plane and the diluted absorption solution D fallen down on the lower edge of the dispersion plate 50 is guided by the above-mentioned inclination of the plate 50 and introduced to the inner wall of the corresponding heat exchanger pipe 20 in a favorable manner.

Accordingly, the diluted absorption solution D caused to fall down at the central portion of the heat exchanger pipe 20 is securely introduced to the inner wall of the heat exchanger pipe 20 by the presence of the dispersion plate 50 and all of the absorption solution B supplied into the absorber 5 or all of the diluted absorption solution D after reaction is caused to flow down along the inner wall of the heat exchanger pipe 20 whereby all of the absorption solution B supplied into the absorber 5 or all of the diluted absorption solution D after reaction is used for its heat exchange with the cooling water E, thereby securing a high efficiency in heat exchange operation.

It should be noted that the shape and size of each of the constituent members of the absorption refrigerator given in the move mode of practice are only an example and it is possible to change them in variety of ways depending on design requirements and the like.

As described above, the dispersion plate, which has a width substantially equal to the inner diameter of each of the heat exchanger pipes 20 and is spirally twisted about an axis lying substantially the intermediate portion of the width thereof, is disposed on the upper end of each of the heat exchanger pipes disposed in the absorber. Therefore, the absorption solution which falls down near the central portion of the heat exchanger pipe can be introduced to the inner wall of the heat exchanger pipe by means of the dispersion plate.

Consequently, it becomes possible to cause most of the absorption solution supplied to the absorption to flow down along the inner wall of each of the heat exchanger pipes and to use all of the absorption solution for a heat exchange operation through the heat exchanger pipes thereby controlling the lowering of the heat exchange efficiency.

Further, if the lower edge of the dispersion plate is inclined with respect to the horizontal plane, the diluted absorption solution flowing down to the lower edge can be introduced to the inner wall of each of the heat exchanger pipes in a favorable manner by the above-mentioned inclination so that the lowering of the heat exchange efficiency can be controlled in this respect, too.

Fig. 4 shows, as a third example of the present invention, one of the heat exchanger pipes 12 of the evaporator 4 as one of the constituent elements of the absorption refrigerator 1 or one of the heat exchanger pipes 20 of the absorber 5. On the inner wall of the heat exchanger pipe 12 (20), there are formed a plurality of grooves L extending along the inner circumference of the heat exchanger pipe leaving predetermined intervals among them in the longitudinal direction of the pipe. Each of these grooves L is formed of a horizontal surface 60 intersecting at right angles with the inner wall of the heat exchanger pipe and an inclined surface 61 connecting the outer edge of the like horizontal surface 60 of the adjoining upper groove and the base end of the first-mentioned horizontal surface 60 lying therebelow.

In the case of the heat exchanger pipe 12 (20) having the above-described inner wall configuration, the area of the inner wall surface is enlarged by the horizontal surface 60 and the inclined surface 61 thereby securing a large heat exchanger surface.

Thus, when the refrigerant A or the diluted absorption solution D is caused to flow down, the flowing direction of the refrigerant A or the diluted absorption solution D changes at the top end of the horizontal surface 60 of the groove L to flow toward the bottom of the groove L along the inclined surface as shown by the arrow R in Fig. 4 and after running against the horizontal surface 60 at the base end of the inclined surface 61, it flows along the horizontal surface 60 toward the top end thereof so that a whirl designated by the letter "Y" in Fig. 4 generates at the bottom of the groove L.

Consequently, the refrigerant A or the diluted absorption solution D at the bottom of the groove 1 is agitated to promote its hat exchange with each of the heat exchanger pipes 12 (20) thereby inhibiting the lowering of the heat exchange efficiency of the evaporator or the absorber 5.

## Claims

1. An absorption refrigerator comprising:
a rectifier (2) having a heating portion (7) for heating an absorption solution (D) which has absorbed a heat exchanging refrigerant (A) and separating by vaporization the refrigerant (A) from the absorption solution (D);
a condenser for condensing and liquefying the separated vaporized refrigerant; an evaporator (4) into which the liquefied refrigerant (A) from the condenser (3) is supplied and which is adapted to vaporize the refrigerant (A) through its heat exchange with a heat medium (C) brought into contact with the outer surface thereof; and, an absorber (5) for allowing the refrigerant (A) to be absorbed in the absorption solution by causing the vaporized refrigerant (A) supplied from the evaporator (4) to react against the absorption solution from the rectifier and for circulating the absorption solution which has absorbed the refrigerant therein, through the rectifier, wherein the absorber (5) comprises a pair of vertically spaced apart upper (25) and lower partition plates and a plurality of heat transfer pipes (20) passing through the partition plates (25), said upper partition plate (25) being provided with a plurality of through holes (25a) for permitting said heat exchange pipes (20) respectively to pass therethrough, the inner wall surface (20a) of each of said through holes (25a) being funnel-shaped to become gradually larger in diameter as it extends upward and the upper end of each of said heat exchange pipes (20) being expanded radially so as to extend along the inner wall surface (20a) of each of said through holes (25a) to thereby become press-fitted to said inner wall surface (20).

2. An absorption refrigerator according to claim 1, wherein at least one of said evaporator (4) and said absorber (5) has a plurality of heat exchanger pipes (12; 20) each having on the inner wall thereof a number of circumferential grooves (Y) leaving predetermined intervals among said grooves in the longitudinal direction of each of said heat exchanger pipes (12; 20), and each of said grooves (Y) is formed of a combination of a horizontal surface (60) intersecting at right angles with said inner wall of said heat exchanger pipes (12; 20) and an inclined surface (61) connecting the outer edge of said horizontal surface (60) of the adjoining upper groove and the base end of said horizontal surface located therebelow.

3. An absorption refrigerator comprising:
a rectifier (2) having a heating portion (7) for heating an absorption solution (D) which has absorbed a heat exchanging refrigerant (A) and separating the refrigerant (A) by vaporization from the absorption solution (D);
a condenser (3) for condensing for condensing and liquefying the separated vaporized refrigerant;
an evaporator (4) into which the liquefied refrigerant (A) from the condenser (3) is supplied and which is adapted to vaporize the refrigerant (A) through its heat exchange with a heat medium (C) brought into contact with the outer surface thereof; and, an absorber (5) for permitting the refrigerant (A) to be absorbed in the absorption solution by causing the vaporized refrigerant (A) from the evaporator (4) to react against the absorption solution (B) which has absorbed the refrigerant (A) therein, and for circulating the absorption solution (B) which has absorbed the refrigerant through the rectifier (2), wherein said absorber (5) has a plurality of heat exchanger (20) pipes into which a diluted absorption (D) solution having absorbed said refrigerant (A) is caused to flow down and a dispersion plate (50) arranged on the upper end of each of said heat exchanger pipes (20), said dispersion plate (50) having a width substantially equal to the inner diameter of each of said heat exchanger pipes (20) and which is spirally twisted about an axis which is parallel to a longitudinal axis of a respective heat exchanger pipe (20).

4. An absorption refrigerator according to claim 3, wherein the lower edge of said dispersion plate is inclined with respect to the horizontal plane.

5. An absorption refrigerator according to claim 3, wherein at least one of said evaporator (4) and said absorber (5) has a plurality of heat exchanger pipes (12; 20) each having on the inner wall thereof a number of circumferential grooves (Y) leaving predetermined intervals among said grooves in the longitudinal direction of each of said heat exchanger pipes (12; 20); and,
each of said grooves are formed of a combination of a horizontal surface (60) intersecting at right angles with said inner wall of said heat exchanger pipes (12; 20) and an inclined surface (61) connecting the outer edge of said horizontal surface (60) of the adjoining upper groove and the base end of said horizontal surface located therebelow.

6. An absorption refrigerator comprising:
a rectifier (2) having a heating portion (8) for heating an absorption solution (D) which has absorbed a heat exchanging refrigerant (A) and separating the refrigerant (A) by vaporization from the absorption solution (D);
a condenser (3) for condensing and liquefying the separated vaporized refrigerant; an evaporator (4) into which the liquefied refrigerant (A) from the condenser (3) is supplied and which is adapted to vaporize the refrigerant (A) through its heat exchange with a heat medium (C) brought into contact with the outer surface thereof and an absorber (5) for permitting the refrigerant (A) to be absorbed in the absorption solution by causing the vaporized refrigerant (A) supplied from the evaporator (4) to react against the absorption solution from the rectifier (2), wherein at least one of the evaporator (4) and the absorber (5) has a plurality of heat exchanger pipes (12; 20), each of the plurality of heat exchanger pipes (12; 20) has on the inner wall thereof a plurality of circumferentially extending, spaced apart grooves (Y), and each of the grooves (Y) having a horizontal surface (60) extending perpendicularly to said inner wall and an inclined surface (61) connecting an outer edge of said horizontal surface (60) of the adjoining upper groove and the base end of said horizontal surface (60) located therebelow.
